# DEMANDE DE BREVET EUROPEEN

(11) **EP 3 939 435 A1**
(43) Date de publication de la demande: **19.01.2022**
(21) Numéro de dépôt: 21189679.0
(22) Date de dépôt: 13.06.2017
(51) Int. Cl.: A23G 1/36, A23G 1/40, A23G 1/46, A23G 1/48, A23G 1/52, A23G 1/56, A23G 9/46, A23G 9/52, A23G 3/34, A23G 3/40, A23G 3/42, A23G 3/46, A23G 3/52, A23P 30/40

(54) **PRODUIT ALIMENTAIRE ANHYDRE À BASE DE BEURRE DE CACAO ET DE MATIÈRE SÈCHE VÉGÉTALE**

(30) Priorité: 14.06.2016 FR 1655470
(62) Demande divisionnaire de: 17732053.8
(71) Demandeur: Sonafi, 78220 Viroflay (FR)
(72) Inventeur: BOURGEAY, Julien, 26260 Saint Donat sur l'Herbasse (FR); CLAVEYROLAT, Alban, 26300 Chateauneuf-sur-Isère (FR); SAGLIO, Aurélie, 77300 Fontainebleau (FR)
(74) Mandataire: Gevers & Orès

(57) **Abrégé**

La présente invention se rapporte à un nouveau produit alimentaire anhydre à base de beurre de cacao et de matière sèche végétale destiné à être hydraté pour permettre la réalisation rapide et facile de préparations alimentaires élaborées sucrées ou salées ; elle se rapporte également à son procédé de préparation et à son utilisation pour la fabrication de préparations alimentaires élaborées.

## Description

La présente invention se rapporte au domaine de l'industrie alimentaire.

Elle vise plus spécifiquement un nouveau produit alimentaire anhydre à base de beurre de cacao et de matière sèche végétale (fruit, légume, épice, matière sèche de cacao...) ; ce produit alimentaire anhydre est destiné à être hydraté et permet une réalisation rapide et facile de préparations alimentaires élaborées sucrées ou salées. Plus spécifiquement, ce nouveau produit alimentaire anhydre permet, après réhydratation, de réaliser des préparations alimentaires élaborées de différentes textures en fonction de la quantité d'hydratant ajouté. Quelle que soit la texture recherchée dans la préparation finale, ledit produit, par son profil aromatique concentré, permet d'obtenir un goût optimal (intense, franc, prononcé...) en comparaison des préparations similaires obtenues par des pratiques traditionnelles. Le produit selon l'invention peut être conservé un an dans des conditions de stockage similaires à un chocolat sans présenter de défaut organoleptique ou structurel.

A l'heure actuelle, les matières premières contenant du beurre de cacao utilisées par les professionnels des métiers de bouche (chocolatiers, pâtissiers et cuisiniers...) pour la réalisation de préparations alimentaires élaborées (ganaches, mousses, crème pâtissière, glaces, boissons...) consistent essentiellement en des chocolats, notamment des chocolats de couverture, ou du beurre de cacao pur.

Le chocolat est utilisé comme vecteur d'arômes mais aussi comme texturant grâce au beurre de cacao qu'il contient. La réalisation de préparations alimentaires élaborées à base de chocolat consiste à ajouter au chocolat des matières alimentaires (par exemple, crème, beurre, sucre, œuf...) permettant de faire varier la texture de la préparation finale.

Le beurre de cacao est quant à lui utilisé dans la réalisation de préparations alimentaires élaborées comme texturant, afin d'apporter dureté « à froid » et fondant en bouche.

La préparation de dessert chocolaté nécessite un travail long et délicat du chocolat afin de le transformer en appareil pour desserts (ganache, mousse, crème pâtissière, glace par exemple). En effet, la formulation de ces desserts est rendue complexe par les équilibres à trouver entre les différentes phases grasses « texturantes », la phase aqueuse, et la quantité de matières sèches mais également à cause de l'étape d'émulsification, c'est-à-dire du mélange intime entre phase grasse et aqueuse, qui déterminera la texture finale et la conservation de la préparation alimentaire élaborée.

A titre d'exemple, pour la préparation d'une ganache, les étapes sont généralement les suivantes : un mélange de crème et de sucre est porté à ébullition et versé peu à peu sur du chocolat puis l'ensemble est homogénéisé par mélange. Pour le mélange on pourra utiliser par exemple la maryse, la spatule, la feuille, le robot broyeur avec ou sans vide et le mixeur plongeur. Une fois le mélange terminé, il est conseillé de contrôler que la température du mélange ne dépasse pas 40°C avant d'ajouter du beurre laitier en morceaux.

Les pratiques en cuisine et pâtisserie consistant à réaliser une émulsion sont la base de différentes préparations allant de la ganache à la boisson en passant par les textures crémeuses, mousseuses ou les glaces.

C'est l'équilibre entre les différentes matières grasses, la phase aqueuse, et les matières sèches dégraissées, qui permet d'obtenir, après émulsion, ces textures variées.

Cet équilibre est délicat à obtenir car la fabrication de ces préparations alimentaires élaborées consiste à mélanger différentes matières premières déjà complexes (par exemple, la crème est elle-même composée d'eau, de matière grasse laitière, de glucides et de protéines).

C'est en étudiant la structure microscopique des ganaches au chocolat puis en réalisant des essais sur l'optimisation des propriétés physico-chimiques de ces dernières que la Demanderesse a mis au point un nouveau produit alimentaire anhydre à base de beurre de cacao et de matière sèche végétale.

Les premiers essais ont initialement été réalisés avec de la matière sèche de cacao mais ils ont rapidement été étendus à d'autres matières sèches provenant, par exemple, de fruits, de légumes, d'épices, de céréales... La composition et les propriétés physico-chimiques dudit produit -destiné à des applications identiques à celles du chocolat- permettent une simplification de mise en œuvre, un gain de temps ainsi qu'une texturation plus rapide de préparations alimentaires élaborées telles que les desserts pâtissiers. La formulation dudit produit permet de maximiser sa conservation tout en facilitant l'obtention de différentes textures et un goût optimal en comparaison des applications similaires obtenues par des pratiques traditionnelles.

Plus spécifiquement, ce produit alimentaire anhydre à base de beurre de cacao et de matière sèche végétale est composé de différents ingrédients anhydres. Il constitue un mélange concentré (par exemple, dans le cas d'une ganache chocolat, il s'agirait d'une ganache qui serait exempte d'eau) et dispose des propriétés physico-chimiques du chocolat à l'état brut (rhéologie, humidité, cristallisation, durée de conservation...).

Une formulation optimisée (choix des ingrédients et équilibrage de la recette) ainsi qu'un procédé spécifique (broyage fin et conchage de l'ensemble de ses ingrédients) confèrent à ce produit alimentaire anhydre des propriétés organoleptiques (aromatiques et de texture) innovantes après réhydratation.

L'utilisation dudit produit simplifie avantageusement le travail de l'Homme du métier en réduisant le temps de mise en œuvre global et en limitant les contraintes de fabrication (stockage matières premières, gestion de l'espace de travail, maitrise des paramètres de fabrication...). La mise en œuvre dudit produit facilite la déclinaison des préparations alimentaires élaborées en différentes textures pour un profil aromatique donné tout en limitant les risques de défauts pouvant intervenir lors de la mise en œuvre des différents ingrédients.

De façon plus générale, le produit alimentaire anhydre offre la possibilité de fabriquer des préparations alimentaires élaborées ayant une palette de textures très large sans modifier le profil aromatique conféré par la ou les matières sèches végétales utilisées.

### Produit alimentaire anhydre

La présente invention se rapporte ainsi à un produit alimentaire anhydre comprenant :
- entre 15% et 40% en masse de beurre de cacao ;
- entre 3% et 50% ou entre 5% et 50% en masse de matière sèche végétale ;
- entre 10% et 50%, de préférence, entre 10% et 38%, en masse de mono-, di- et/ou polysaccharides ;
- entre 10% et 40% en masse de matière grasse ayant un SFC inférieur ou égal à 40% à 20°C ;
- optionnellement jusqu'à 30% en masse de matière sèche laitière ;
- optionnellement jusqu'à 20% en masse d'agent sucrant ;
- optionnellement jusqu'à 8% en masse d'épices ; et
- optionnellement jusqu'à 5% en masse d'émulsifiant ;
ce produit est tel que :
- le rapport pondéral entre la matière grasse ayant un SFC inférieur ou égal à 40% à 20°C et le beurre de cacao est supérieur à 0,25 ;
- sa teneur en eau est inférieure à 5% en poids ; et
- la matière sèche du produit a un D(90) inférieur ou égal à 50 microns dans le produit fini.

De façon optionnelle, le produit alimentaire anhydre selon l'invention est tel que le rapport pondéral entre la matière grasse totale (beurre de cacao et masse de matière grasse ayant un SFC inférieur ou égal à 40% à 20°C) et la matière sèche dégraissée totale est supérieur ou égal à 0,7.

On entend par beurre de cacao un produit issu intégralement de fèves de cacao défini par la dénomination légale en vigueur (DIRECTIVE 2000/36/CE DU PARLEMENT EUROPÉEN ET DU CONSEIL du 23 juin 2000 relative aux produits de cacao et de chocolat destinés à l'alimentation).

Par matière sèche végétale, on entend des végétaux entiers ou fragmentés, dégraissés et déshydratés ou partiellement déshydratés.

Sans caractère limitatif, cette matière sèche végétale peut provenir de cacao (grué, fève de cacao torréfiée fermentée ou non, de poudre de cacao), de fruits (agrumes tels que citron, orange, pamplemousse, lime... ; baies telles que fraise, framboise, groseille, raisin... ; fruits à pépins tels que pomme, poire... ; fruits à noyau tels que abricot, cerise, pêche, olive... ; fruits à coque tels que noisette, noix, amande... ; fruits des régions tropicales tels que ananas, banane, mangue, passion...), de légumes (légumes-racine tels que carotte, panais, betterave... : légumes-fruit tels que tomate, poivron, courge... ; légumes-feuille tels que épinard, chou, poireau... ; légumes gousse tels que pois, haricot, fèves... ; légumes-bulbes tels que ail, oignon, échalote... ou encore les champignons), de céréales, de fleurs comestibles, de condiments, d'herbes aromatiques... ou de leur mélange.

Par mono-, di- et polysaccharides, on entend un sucre composé respectivement d'un, deux ou plusieurs oses. On peut citer, sans caractère limitatif, parmi les monosaccharides, le fructose, le galactose, le glucose... ; parmi les disaccharides, le saccharose, le maltose, le lactose... ; parmi les polysaccharides, l'inuline, l'amidon, l'amylopectine, la cellulose, la dextrine, la pectine, l'agar-agar, les carraghénanes, les maltodextrines (produits résultant de l'hydrolyse d'amidon ou de fécules). Ces sucres peuvent être utilisés seuls ou en mélange.

L'utilisation des mono-, di- et polysaccharides peut remplir l'une et/ou l'autre des fonctions suivantes : apporter un goût sucré au produit alimentaire anhydre selon l'invention et/ou jouer un rôle d'agent de charge.

Pour apporter un goût sucré, on utilisera préférentiellement le saccharose.

Les sucres ayant des propriétés d'agent de charge sont préférentiellement choisis parmi les polysaccharides.

Par matière grasse ayant un SFC inférieur ou égal à 40% à 20°C, on entend la matière grasse animale et/ou végétale (hors beurre de cacao) caractérisée par une teneur en matière grasse solide (désignée SFC pour « solid fat content » dans ce qui suit) inférieure ou égale à 40% à 20°C. Afin d'atteindre cette valeur de SFC, l'Homme du métier sait mélanger et/ou fractionner les matières grasses à sa disposition afin d'en optimiser le profil de fonte. La matière grasse ayant un SFC inférieur ou égal à 40% à 20°C joue un rôle de texturant dans le produit selon l'invention en apportant un caractère fondant au produit réhydraté.

De préférence, la matière grasse ayant un SFC inférieur ou égal à 40% à 20°C est une matière grasse issue de produits laitiers par exemple choisis parmi un produit provenant de la déshydratation partielle ou totale de lait entier, de lait partiellement écrémé, de crème, de beurre ou de matière grasse lactique.

Par matière sèche laitière, on entend une matière déshydratée ou partiellement déshydratée et dégraissée issue de produits laitiers tels que précédemment définis.

Les teneurs en matière grasse ayant un SFC inférieur ou égal à 40% à 20°C et en matière sèche laitière peuvent être atteintes en utilisant des produits laitiers provenant de la déshydratation partielle ou totale de lait entier, de lait partiellement ou totalement écrémé, de crème, de beurre ou de matière grasse lactique.

Par agent sucrant, on entend tout polyol et édulcorant qu'il pourrait être utile d'ajouter au produit alimentaire anhydre selon l'invention si le pouvoir sucrant des mono-, di-et/ou polysaccharides déjà utilisés n'est pas suffisant. Un autre avantage de l'utilisation de ces ingrédients résulte de leurs propriétés anti-cristallisante et/ou humectante.

La ou les épices, incluant les extraits d'épices, sont choisies par l'Homme du métier en fonction du goût qu'il souhaite conférer au produit selon l'invention ; de préférence, il s'agit de vanille.

Tout émulsifiant alimentaire peut être utilisé pour la préparation du produit selon l'invention (lécithine, Tween, mono- et diglycéride, esters lactiques d'acides gras...); de préférence, l'émulsifiant est de la lécithine.

Les matières premières utilisées pour la préparation du produit selon l'invention doivent être anhydres, c'est-à-dire que leur teneur en eau doit être inférieure à 10% en masse.

Les propriétés physicochimiques du produit selon l'invention sont importantes pour que son utilisation apporte des bénéfices en termes de qualité aux préparations alimentaires élaborées à partir dudit produit alimentaire anhydre, de simplification et de rapidité de leur fabrication.

Ainsi, de façon préférée, la rhéologie du produit selon l'invention est telle qu'il a une viscosité comprise entre 0,2 et 5 Pa.s et/ou une limite d'écoulement comprise entre 2 et 35 Pa selon la méthode IOCCC2000 (International Office of Cocoa, Chocolate and sugar Confectionery) - Mesures réalisées sur rhéomètre Haake^{™} Mars III ThermoFisher.

Le produit selon l'invention a encore pour caractéristique de pouvoir être mis en forme comme un chocolat en suivant les bonnes pratiques connues de l'Homme du métier ; c'est-à-dire qu'il peut être tempéré, puis coulé dans un moule et être démoulé facilement après refroidissement pour obtenir la forme désirée.

La composition du produit selon l'invention peut être ajustée selon l'utilisation qui doit en être faite.

Ainsi, selon un premier mode de réalisation, le produit alimentaire anhydre selon l'invention est à base de beurre de cacao et de matière sèche végétale de cacao et comprend :
- entre 15% et 40% en masse de beurre de cacao ;
- entre 3% et 40% en masse de poudre de cacao sec dégraissé ;
les teneurs en beurre de cacao et en cacao sec dégraissé peuvent être atteintes en utilisant du cacao ou des produits dérivés de cacao tels que les fèves ou fragments de fève de cacao sous différentes formes (grué, liqueur, nibs...), des fèves partiellement ou totalement dégraissées (liqueur dégraissé, poudre de cacao...) ou un mélange de ces différents ingrédients ;
- entre 15% et 50%, de préférence entre 15% et 38%, en masse de mono-, di- et/ou polysaccharides ; préférentiellement entre 25% et 35% ;
- entre 10% et 40% en masse de matière grasse ayant un SFC inférieur ou égal à 40% à 20°C ; préférentiellement entre 15% et 25% ; de préférence, il s'agit d'une matière grasse laitière ;
- optionnellement jusqu'à 30% en masse de matière sèche laitière ;
les teneurs en matière grasse ayant un SFC inférieur ou égal à 40% à 20°C et en matière sèche laitière peuvent être atteintes en utilisant des produits laitiers provenant de la déshydratation partielle ou totale de lait entier, de lait partiellement ou totalement écrémé, de crème, de beurre ou de matière grasse lactique ;
- optionnellement jusqu'à 20% en masse d'agent sucrant ;
- optionnellement jusqu'à 8% en masse d'épices ou extraits d'épices ; préférentiellement entre 1 et 2% d'épices, par exemple de la vanille ;
- optionnellement jusqu'à 5% en masse d'émulsifiant ; préférentiellement entre 0,5% et 1%, par exemple de lécithine de soja ;
ce produit est tel que :
- le rapport pondéral entre la matière grasse ayant un SFC inférieur ou égal à 40% à 20°C et le beurre de cacao est supérieur à 0,25 ;
- optionnellement, le rapport pondéral entre la matière grasse totale et la matière sèche dégraissée totale est supérieur ou égal à 0,7 ;
- sa teneur en eau est inférieure à 5% en poids ; et
- la matière sèche du produit a un D(90) inférieur ou égal à 50 microns dans le produit fini.

La composition du produit alimentaire anhydre à base de beurre de cacao et de matière sèche végétale de cacao peut être adaptée selon l'intensité du goût recherché.

Ainsi, pour obtenir un profil aromatique type « chocolat noir » (après réhydratation), le produit alimentaire anhydre selon l'invention est à base de beurre de cacao et de matière sèche végétale de cacao et comprend :
- entre 20% et 40% en masse de beurre de cacao ;
- entre 10% et 40% en masse de poudre de cacao sec dégraissé ;
les teneurs en beurre de cacao et en cacao sec dégraissé peuvent être atteintes en utilisant du cacao ou des produits dérivés tels que les fèves ou fragments de fève de cacao sous différentes formes (grué, liqueur, nibs...), des fèves partiellement ou totalement dégraissées (liqueur dégraissée, poudre de cacao...) ou un mélange de ces différents ingrédients ;
- entre 20% et 45%, de préférence entre 20% et 38%, en masse de mono-, di- et/ou polysaccharides ;
- entre 10% et 30% en masse de matière grasse ayant un SFC inférieur ou égal à 40% à 20°C ; de préférence il s'agit de matière grasse laitière ;
- optionnellement jusqu'à 20% en masse de matière sèche laitière ;
les teneurs en matière grasse ayant un SFC inférieur ou égal à 40% à 20°C et en matière sèche laitière peuvent être atteintes en utilisant des produits laitiers provenant de la déshydratation partielle ou totale de lait entier, de lait partiellement ou totalement écrémé, de crème, de crème partiellement ou totalement déshydratée, de beurre ou de matière grasse lactique ;
- optionnellement jusqu'à 20% en masse d'agent sucrant ;
- optionnellement jusqu'à 5% en masse d'épices ; préférentiellement entre 0 et 1,5%, par exemple de la vanille ;
- optionnellement jusqu'à 5% en masse d'émulsifiant ; préférentiellement entre 0,5% et 1%, par exemple de la lécithine de soja ;
ce produit est tel que :
- le rapport pondéral entre la matière grasse ayant un SFC inférieur ou égal à 40% à 20°C et le beurre de cacao est supérieur à 0,25 ;
- optionnellement, le rapport pondéral entre la matière grasse totale et la matière sèche dégraissée totale est supérieur ou égal à 0,7 ;
- sa teneur en eau est inférieure à 5% en poids ; et
- la matière sèche du produit a un D(90) inférieur ou égal à 50 microns dans le produit fini.

Pour obtenir un profil aromatique type chocolat lacté, le produit alimentaire anhydre selon l'invention est à base de beurre de cacao et de matière sèche végétale de cacao et comprend :
- entre 15% et 30% en masse de beurre de cacao ;
- entre 3% et 20% en masse de poudre de cacao sec dégraissé ;
les teneurs en beurre de cacao et en cacao sec dégraissé peuvent être atteintes en utilisant du cacao ou des produits dérivés tels que les fèves ou fragments de fève de cacao sous différentes formes (grué, liqueur, nibs...), des fèves partiellement ou totalement dégraissées (liqueur dégraissée, poudre de cacao...) ou un mélange de ces différents ingrédients ;
- entre 20% et 50%,de préférence entre 20% et 38%, en masse de mono-, di- et/ou polysaccharides ;
- entre 10% et 20% en masse de matière grasse ayant un SFC inférieur ou égal à 40% à 20°C ; de préférence il s'agit de matière grasse laitière ;
- entre 10% et 30% en masse de matière sèche laitière ;
les teneurs en matière grasse ayant un SFC inférieur ou égal à 40% à 20°C et en matière sèche laitière peuvent être atteintes en utilisant des produits laitiers provenant de la déshydratation partielle ou totale de lait entier, de lait partiellement ou totalement écrémé, de crème, de crème partiellement ou totalement déshydratée, de beurre ou de matière grasse lactique ;
- optionnellement jusqu'à 20% en masse d'agent sucrant ;
- optionnellement jusqu'à 5% en masse d'épices ; préférentiellement entre 0 et 1,5%, par exemple de la vanille.
- optionnellement jusqu'à 5% en masse d'émulsifiant ; préférentiellement entre 0,5% et 1%, par exemple de la lécithine de soja ;
ce produit est tel que :
- le rapport pondéral entre la matière grasse ayant un SFC inférieur ou égal à 40% à 20°C et le beurre de cacao est supérieur à 0,25 ;
- optionnellement, le rapport pondéral entre la matière grasse totale et la matière sèche dégraissée totale est supérieur ou égal à 0,7 ;
- sa teneur en eau est inférieure à 5% en poids.
- la matière sèche du produit a un D(90) inférieur ou égal à 50 microns dans le produit fini.

Selon un second mode de réalisation, le produit alimentaire anhydre selon l'invention est à base de beurre de cacao et de matière sèche végétale de fruit et/ou de légume et comprend :
- entre 15% et 40% en masse de beurre de cacao ;
- entre 5% et 50% en masse de fruit et/ou légume déshydraté ; préférentiellement entre 15 et 25% ;
- entre 15% et 50% en masse de mono-, di- et/ou polysaccharides ; préférentiellement entre 25 et 45% ;
- entre 10% et 40% en poids de matière grasse ayant un SFC inférieur ou égal à 40% à 20°C ; préférentiellement entre 15% et 25% ; de préférence, il s'agit de matière grasse laitière ;
- optionnellement jusqu'à 30% en masse de matière sèche laitière ; préférentiellement inférieure à 15% ;
les proportions de matière grasse laitière ou dérivés et de matière sèche laitière peuvent être atteintes en utilisant des produits laitiers provenant de la déshydratation partielle ou totale de lait entier, de lait partiellement ou totalement écrémé, de crème, de crème partiellement ou totalement déshydratée, de beurre ou de matière grasse lactique ;
- optionnellement jusqu'à 20% en masse d'agent sucrant ;
- optionnellement jusqu'à 8% en masse d'épices ;
- optionnellement jusqu'à 5% en masse d'émulsifiant ; préférentiellement entre 0,5% et 1%, par exemple de lécithine de soja ;
ce produit est tel que :
- le rapport pondéral entre la matière grasse ayant un SFC inférieur ou égal à 40% à 20°C et le beurre de cacao est supérieur à 0,25 ;
- optionnellement, le rapport pondéral entre la matière grasse totale et la matière sèche dégraissée totale est supérieur ou égal à 0,7 ;
- sa teneur en eau est inférieure à 5% en poids ; et
- la matière sèche du produit a un D(90) inférieur ou égal à 50 microns dans le produit fini.

Le produit alimentaire anhydre selon l'invention préparé à partir de ces deux modes de réalisation permet, après réhydratation, de réaliser des préparations alimentaires élaborées, de différentes textures (type ganache, crémeux, sauce, boisson, mousse, glace par exemple), en fonction de la quantité d'hydratant ajouté.

### Procédé de préparation du produit alimentaire anhydre selon l'invention

La présente invention se rapporte également à un procédé de préparation du produit alimentaire anhydre ; selon l'invention, ce procédé comprend les étapes suivantes :
a) Broyage et homogénéisation

Cette première étape consiste à mélanger et broyer les différents ingrédients de l'invention jusqu'à obtenir une masse dont la granulométrie est caractérisée par un D(90) inférieur ou égal à 50 microns. Cette masse doit être ensuite homogénéisée par agitation en maintenant une température comprise entre 35 et 75°C.

Il est ensuite possible de concher (brasser et aérer la masse) jusqu'à 72h afin d'aérer et de désacidifier la masse pour obtenir le profil aromatique recherché.

A titre indicatif, les outils de broyage et/ou conchage suivants peuvent être utilisés : les broyeuses à 2 ou 5 cylindres (Buhler ou Carle et Montanari), les broyeurs à broches (type MAP de Carle Montanari), les broyeurs à marteaux (type SCS ou SUM de Bühler), ou à couteaux (Bauermeister), les broyeurs à billes (Bühler, Wiener), les broyeurs à air comprimé (Alpine, Hosokawa), les broyeurs dits universels (RoboQbo, Stephan), les systèmes de broyage continus (NAGEMA), les conches dites universelles (MacIntyre), les conches à un ou plusieurs axes, horizontaux (Frisse, Thouet), verticaux (Carle et Montanari, Petzholdt) ou à axe incliné (Bauermeister)
b) Tempérage du produit, afin de contrôler la cristallisation du beurre de cacao et de la matière grasse ayant un SFC ≤ 40% à 20°C, pour une mise en œuvre optimale du produit ;
c) Moulage du produit obtenu à l'issue de l'étape b) de tempérage ; il peut être moulé sous différentes formes (drops, fèves, tablettes, blocs ou encore coulé dans des seaux par exemple).

### Utilisation du produit alimentaire anhydre selon l'invention

La présente invention se rapporte encore à l'utilisation du produit alimentaire anhydre selon l'invention pour la fabrication d'une préparation alimentaire élaborée ; quelle que soit l'application envisagée, l'utilisation de ce produit nécessite l'ajout d'un hydratant.

Selon l'invention, l'hydratant est un liquide aqueux tel que de l'eau, infusions, soupe, thé, café, jus (fruit, légume, plante, poisson, viande), lait animal/végétal... l'hydratant est constitué d'au moins 80% d'eau.

Selon les applications envisagées, le rapport massique entre l'hydratant et le produit alimentaire anhydre est compris entre 0, 1 et 4.

La quantité d'hydratant à ajouter au produit alimentaire anhydre est déterminée en fonction de sa teneur en eau et de la texture recherchée pour l'application finale.

La quantité d'hydratant détermine la texture finale de l'application ainsi que son temps de conservation ; il convient de souligner à propos de l'hydratant ajouté que :
- s'il s'agit d'eau, il ne dénature pas le profil aromatique du produit alimentaire anhydre selon l'invention. Il s'agit là d'un avantage substantiel par rapport aux procédés traditionnels qui nécessitent l'ajout d'ingrédients comme de la crème, des œufs, du sucre..., ajout ayant pour effet de modifier, d'altérer, le goût du produit de départ. L'invention permet ainsi d'obtenir un profil aromatique conservé quelles que soient les textures recherchées ;
- s'il consiste en du jus de fruit ou du café par exemple, il peut apporter des arômes complémentaires recherchés.

A titre d'illustration, le tableau ci-après indique des gammes de quantité d'hydratant à ajouter au produit alimentaire anhydre selon l'invention en fonction du type de préparation alimentaire élaborée. Ce tableau précise également les éventuels procédés à mettre en œuvre en plus de l'étape préalable de préparation de l'émulsion avec le produit alimentaire anhydre selon l'invention et l'hydratant.

| **Applications (type de préparation alimentaire élaborée)** | **% en masse d'hydratant par rapport à la masse totale de la préparation alimentaire élaborée** | | **Procédés additionnels à l'émulsion** |
|---|---|---|---|
| | **Minimum** | **Maximum** | |
| **Ganaches** | 10% | 35% | - |
| **Mousses** | 20% | 50% | Foisonnement |
| **Crémeux** | 35% | 60% | - |
| **Sauces** | 35% | 60% | - |
| **Glaces (sorbet ou crème glacée)** | 40% | 80% | Foisonnement + Congélation |
| **Boissons** | 45% | 80% | - |

A titre d'exemple, la comparaison d'une émulsion chocolatée obtenue avec le produit alimentaire anhydre selon le premier mode de réalisation de l'invention auquel est ajouté un hydratant par rapport à une émulsion chocolatée de même composition obtenue par un procédé traditionnel a été conduite comme détaillé dans l'exemple III et montre que :
- la texturation (cristallisation) de l'émulsion obtenue avec le produit alimentaire anhydre selon l'invention est au moins deux fois plus rapide ;
- son profil aromatique n'est pas dénaturé par les ingrédients « texturants » ajoutés dans le procédé traditionnel (crème, lait, œuf, sucre...) ; et
- sa texture est similaire à celle de l'application obtenue par les techniques connues de l'Homme du métier aussi bien au cours de la mise en œuvre que durant la conservation.

Plus spécifiquement, la comparaison d'une ganache préparée à partir du produit alimentaire anhydre selon l'invention et d'un hydratant tel que de l'eau avec une ganache préparée selon une recette classique (mélange de chocolat, de crème, de beurre et de sucre) montre que la préparation alimentaire élaborée à partir du produit selon l'invention présente des caractéristiques similaires et/ou améliorées par rapport à celle de la ganache dite classique :
- une consistance pâteuse à semi-solide, permettant le travail « classique » de l'Homme du métier ;
- une décristallisation majoritaire à une température de 40°C ;
- une découpe rapide et nette ;
- une stabilité à la congélation et décongélation ;
- une sensibilité faible à l'oxydation.

Lorsque le produit alimentaire anhydre selon l'invention est utilisé pour la fabrication d'une préparation alimentaire élaborée foisonnée, une mousse par exemple, le procédé à mettre en œuvre est très simple puisqu'il suffit d'ajouter l'hydratant au produit selon l'invention (entre 20% et 50%) et de foisonner le mélange. On pourra utiliser un batteur, un robot ménager ou tout autre système d'incorporation de gaz.

La présente invention se rapporte ainsi à une préparation alimentaire élaborée foisonnée composée du produit alimentaire anhydre selon l'invention et ayant une quantité d'hydratant comprise entre 20% et 50% en masse par rapport à la masse totale de ladite préparation et à son procédé de fabrication qui comprend les étapes de :
- mélange dudit hydratant et dudit produit alimentaire anhydre ; et
- foisonnement dudit mélange avec un système d'incorporation de gaz.

On rappelle qu'un procédé classique de préparation de mousse au chocolat pâtissière nécessite d'utiliser généralement un produit laitier (type crème) ou des œufs que l'on a préalablement foisonnés puis que l'on incorpore progressivement à la masse. Pour les applications aux fruits/légumes, l'utilisation de gélatine est souvent préconisée.

Outre la facilité de préparation, la mousse obtenue à partir du produit alimentaire anhydre selon l'invention est aérée, fondante et est aussi stable dans le temps qu'une mousse obtenue par un procédé de fabrication traditionnel.

Lorsque le produit alimentaire anhydre selon l'invention est utilisé pour la préparation d'une glace, le procédé à mettre en œuvre consiste à mélanger entre 40% et 80% en masse d'un hydratant (préférentiellement de l'eau) avec le produit alimentaire anhydre, à mixer, à turbiner entre -6 et -10°C et enfin à stocker la préparation au congélateur (préférentiellement à -18°C).

La glace ainsi obtenue possède les mêmes caractéristiques organoleptiques, de texture et de conservation que celle obtenue par les techniques connues de l'Homme du métier à iso-formule finale.

La présente invention se rapporte également à une glace composée du produit alimentaire anhydre selon l'invention et ayant une quantité d'hydratant comprise entre 20% et 60% en masse par rapport à la masse totale de ladite préparation et à son procédé de fabrication qui comprend les étapes de :
- mélange dudit hydratant et dudit produit alimentaire anhydre ; et
- mixage et turbinage dudit mélange entre -6 et -10°C ; et
- stockage au congélateur.

Le procédé de fabrication classique d'une glace comprend à titre d'exemple les étapes suivantes : verser de l'eau ou du lait dans un appareil de cuisson ; à 25°C, ajouter de la poudre de lait 0% ; à 30°C, ajouter des sucres ; à 40°C, incorporer les produits gras : les matières grasses (la crème, les jaunes d'œufs et éventuellement le chocolat) ; à 45°C, clôturer l'ajout des ingrédients en incorporant le mélange stabilisant/émulsifiant additionné à une partie de sucre initiale (environ 10%) ; pasteuriser l'ensemble à 85°C pendant 2 minutes puis refroidir rapidement le mix à + 4°C ; si possible, homogénéiser le mix afin de disperser les molécules de matières grasses les plus fines possibles et laisser « maturer » le mix au minimum 12 heures ; enfin, mixer et turbiner entre -6 et -10°C et stocker au congélateur à -18°C.

Le procédé de préparation de glace à partir du produit alimentaire anhydre selon l'invention permet de s'affranchir des étapes de contrôle de la température, de l'étape de pasteurisation ainsi que de la phase de maturation. Par conséquent, l'utilisation du produit alimentaire anhydre selon l'invention pour la préparation de glace permet un gain de temps important pour un résultat identique à iso-formule finale.

Il convient également de souligner que l'optimisation des différents ingrédients du produit selon l'invention limite les risques de défauts lors de la mise en œuvre et de la conservation quelles que soient les applications envisagées.

A titre d'exemple, l'utilisation dudit produit permet de limiter l'apparition de déphasage lors de la préparation d'applications émulsionnées (telle que la ganache). En effet, l'optimisation, notamment, des rapports suivants :
- le rapport pondéral entre la matière grasse ayant un SFC inférieur ou égal à 40% à 20°C et le beurre de cacao est supérieur à 0,25 ;
- le rapport pondéral entre la matière sèche et la matière grasse totale. permet un équilibrage optimal quelle que soit la quantité d'hydratant ajouté.

De plus, l'apparition au cours de la conservation de défauts non visibles lors de la mise en œuvre est également limitée par l'optimisation de l'équilibrage du produit alimentaire anhydre à base de beurre de cacao selon l'invention.

### Figures

Figures 1A et 1B. Les Figures 1A et B représentent le profil de texture après 30 min et 24h à 4°C de trois préparations alimentaires élaborées : la Ganache A, la Ganache C et le Mélange chocolat-eau C dont les recettes sont détaillées dans l'exemple III.
Figure 2. La Figure 2 est un graphique représentant le seuil de contrainte maximale des Ganaches A et C.
Figure 3. La Figure 3 est un graphique représentant le seuil de
   « découpabilité » des Ganaches A et C.
Figure 4. La Figure 4 représente l'évolution de la contrainte maximale en fonction du temps de deux préparations alimentaires élaborées : le Crémeux A et le Crémeux C dont les recettes sont détaillées dans l'exemple III.

### Exemples

### I. Préparation d'un produit alimentaire anhydre selon l'invention

Un cacao marchand est transformé en grué (ou nib) après les étapes de torréfaction et de concassage. Le grué est ensuite broyé pour obtenir un produit semi-fini liquide à 45°C appelé liqueur de cacao. Cette liqueur est mélangée dans un pétrin avec différentes matières premières dans les proportions suivantes (exprimées en masse) :
- Liqueur de cacao : 39,1%
- Beurre de cacao : 4,8%
- Poudre de lait écrémé : 2,2%
- Sucre : 25,4%
- Matière grasse laitière : 28,3%
- Lécithine de soja : 0,3%

Le mélange est ensuite broyé jusqu'à obtenir une masse ayant un D(90) inférieur ou égal à 50 microns puis conché durant 48h à une température comprise entre 50°C et 70°C. La masse est ensuite tempérée puis moulée en fèves de 3,5g qui sont conditionnées en sac après cristallisation.

Le produit obtenu est désigné Produit A.

### II. Fabrication d'une préparation alimentaire élaborée (ganache) à partir du produit A selon l'exemple I

La fabrication consiste à verser 21% en masse d'eau bouillante sur 79% en masse de fèves de Produit A et à homogénéiser l'ensemble par agitation.

La ganache ainsi obtenue est désignée Ganache A.

### III. Comparaison du comportement rhéologique de la préparation alimentaire élaborée de l'exemple II (Ganache A) avec celui de produits alimentaires existants (chocolat et ganache classiques)

Afin de réaliser des essais comparatifs, une Ganache C ayant une composition identique à celle de la Ganache A est préparée selon un procédé classique avec un Chocolat C.

Le Chocolat C est composé de : 63,2% de fève de cacao, 7,7% de beurre de cacao, 28,7% de sucre, 0,4% de lécithine.

Ce Chocolat C est mis en œuvre selon la recette de ganache (dite traditionnelle) suivante (proportions exprimées en masse) :
- 700g de Chocolat C ;
- 500g de crème 35% de matière grasse ;
- 90g de sucre ;
- 150g de beurre laitier.

Le mélange crème/sucre est porté à ébullition puis versé peu à peu sur le chocolat ; l'ensemble est ensuite homogénéisé par agitation. Une fois le mélange terminé, un contrôle de la température est réalisé afin de s'assurer que le mélange ne dépasse pas 40°C. A 39°C, le beurre laitier est ajouté en morceaux.

### Comparaison des Ganaches A et C

La composition des deux ganaches obtenues par ces deux modes de préparation est détaillée dans le tableau ci-après, ces compositions sont sensiblement identiques :

| | **Ganache A** | **Ganache C** |
|---|---|---|
| **Beurre de cacao** | 20,4% | 20,4% |
| **Matière sèche de cacao** | 14,3% | 14,3% |
| **Matière grasse laitière** | 22,3% | 22,3% |
| **Matière sèche laitière** | 1,8% | 1,8% |
| **Sucre** | 20,1% | 20,1% |
| | | |
| **Eau** | 21,1% | 21,1% |

Les proportions de matière grasse et de matière sèche de cacao pour la liqueur de cacao utilisée sont les suivantes :

| | **Matière sèche** | **Matière grasse** |
|---|---|---|
| **Liqueur de cacao** | 46% | 54% |

Les proportions d'eau, de matière sèche (MS) de lait et de matière grasse (MG) de lait pour la crème 35% de matière grasse sont les suivantes :

| | **Eau** | **MS laitière** | **MG laitière** |
|---|---|---|---|
| **Crème 35% MG** | 60% | 5% | 35% |

La préparation de la Ganache A avec le Produit A est beaucoup plus simple et rapide que la méthode traditionnelle de préparation utilisée pour fabriquer la Ganache C.

### a) Texture après cristallisation

On se propose d'évaluer par scissométrie les caractéristiques des Ganaches A et C ainsi que le produit résultant du mélange du Chocolat C avec 21% d'eau selon le procédé utilisé pour la mise en œuvre de la Ganache A (ce produit est désigné Mélange chocolat-eau C).

### Matériel et méthode de scissométrie

L'appareil utilisé est un rhéomètre Mars III, ThermoFisher.

Pour évaluer la texture des différents produits à analyser, un protocole d'analyse par scissométrie a été utilisé. Le protocole permet de caractériser l'évolution de leur texture à partir du moment de leur fabrication.

La texture des différentes préparations alimentaires est évaluée à l'aide d'un rhéomètre Mars III (Thermofisher), doté d'une ailette métallique à quatre pales de diamètre 16mm et de hauteur 10mm. L'ailette descend verticalement dans l'application à une vitesse de 20mm/s, puis effectue une rotation à la vitesse imposée de 0,02 rad/s pendant 5min. La mesure est effectuée à la température ambiante de 20°C. Un relevé de la contrainte nécessaire pour conserver la vitesse de rotation imposée est effectué.

L'application analysée est conditionnée dans un récipient de taille fixe, de telle sorte que :
- la hauteur de produit sous l'ailette est de 10 mm ;
- la distance entre l'extrémité de l'ailette et le bord du produit est de 16mm ;
- le haut de l'ailette est à la même hauteur que la surface plane de l'application.

### Résultats

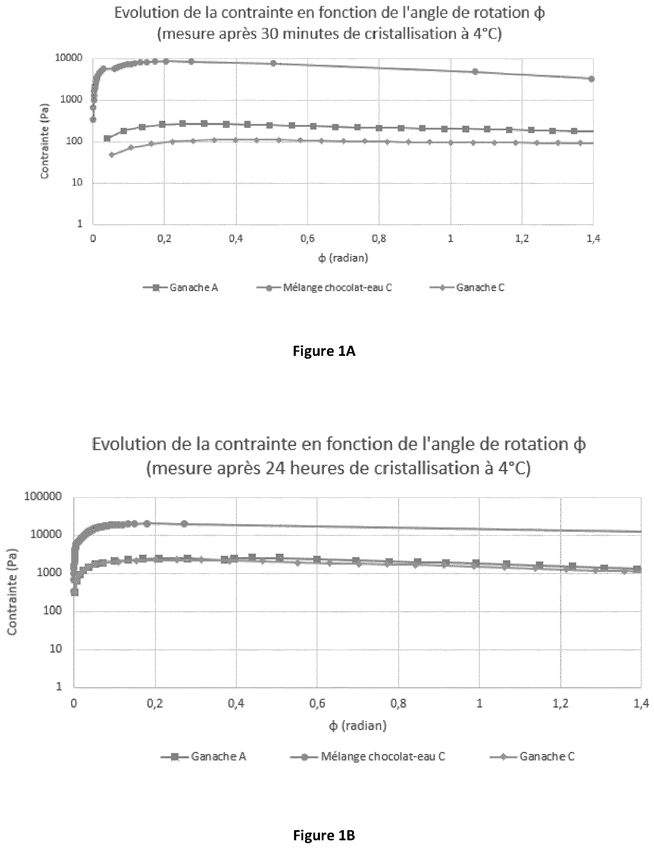

Le profil de texture après 30 min et 24h à 4°C est représenté aux **Figures 1A** et **1B** respectivement.

Ces courbes montrent que les produits Ganache A et Ganache C ont des profils de texture sensiblement proches contrairement au Mélange chocolat-eau C.

La Ganache A, préparée par un procédé bien plus simple et rapide que celui mis en œuvre classiquement pour la fabrication de ganache, présente donc la texture d'une ganache classique.

### b) Cinétique de texturation

Les Ganaches A et C sont suivies en scissométrie pour déterminer la cinétique de texturation, (cristallisation) des applications.

Une fois la mesure complétée, chacun de ces produits est caractérisé par :
- la contrainte maximale relevée au cours de la mesure (ou contrainte à la rupture) ;
- l'angle de rotation de l'ailette correspondant à cette contrainte maximale (ou angle de rupture) ;
- l'indice de « découpabilité », défini comme l'écart entre la contrainte à la rupture et la contrainte à π/2 rad, normalisé par l'écart angulaire correspondant ainsi que la contrainte à la rupture.

Les caractéristiques mentionnées plus haut varient en fonction de la formulation et du temps entre la réhydratation du produit et la réalisation de l'analyse :
- la contrainte maximale mesurée est comprise entre 10Pa et 50000Pa ;
- l'angle à la rupture mesuré varie entre 0,05 rad et 2 rad ;
- l'indice de « découpabilité » varie entre -1 et 2.

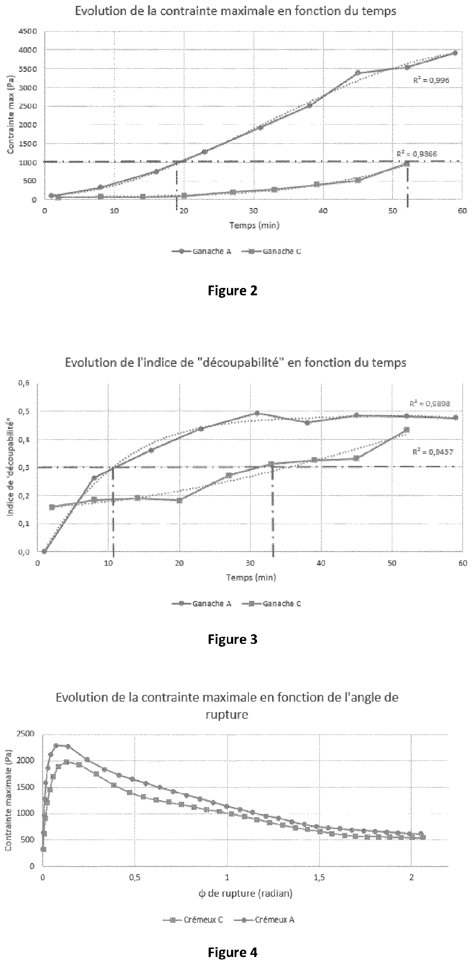

Il est observé sur ces deux graphiques que le seuil de contrainte maximale **(****Figure 2****)** et celui de « découpabilité » **(****Figure 3****)** pour une application de type ganache sont atteints plus rapidement pour la Ganache A que pour la Ganache C.

Ainsi l'utilisation du Produit A pour la fabrication d'une ganache présente à la fois l'avantage d'un procédé simplifié mais aussi celui de l'obtention d'une préparation élaborée plus rapide.

Ces essais ont été reproduits pour un Crémeux A obtenu avec le Produit A et une quantité plus importante d'hydratant que pour la Ganache A, et un Crémeux C.

Le Produit A et le Chocolat C sont les mêmes que précédemment.

La recette traditionnelle utilisée pour le Crémeux C est la suivante : Porter à ébullition un mélange de 500g de crème (35% de matière grasse), de 500g de lait entier et verser sur 200g de jaunes d'œufs préalablement mélangés avec 100g de sucre et enfin cuire le tout à 82/84°C. Cette préparation est mélangée à 540g de Chocolat C jusqu'à obtenir une texture homogène.

La fabrication du Crémeux A est la suivante : Verser 45% d'eau bouillante sur le Produit A et homogénéiser l'ensemble par agitation.

Les profils obtenus pour ces deux produits sont représentés à la **Figure 4****.**

Ces essais montrent que la préparation d'un crémeux avec un Produit A est plus simple, et plus rapide et n'utilise qu'un ingrédient supplémentaire (dans ce cas, de l'eau) contrairement à celle d'un crémeux traditionnel ; en outre, le crémeux obtenu avec le Produit A présente une texture équivalente à celle d'une recette traditionnelle.

L'ensemble de ces essais confirme expérimentalement que l'utilisation dudit produit simplifie avantageusement le travail de l'Homme du métier en réduisant le temps de mise en œuvre global et en limitant les contraintes de fabrication (stockage matières premières, gestion de l'espace de travail, maîtrise des paramètres de fabrication...). La mise en œuvre dudit produit facilite la déclinaison des préparations alimentaires élaborées en différentes textures pour un profil aromatique donné tout en limitant les risques de défauts pouvant intervenir lors de la mise en œuvre des différents ingrédients.

De façon plus générale, le produit alimentaire anhydre offre la possibilité d'élaborer des préparations alimentaires élaborées ayant une palette de textures très large.

**IV. Exemple de recettes de produit anhydre selon l'invention**

| | DN2 Profil aromatique type "chocolat noir" | DL21 Profil aromatique type "chocolat lacté" |
|---|---|---|
| beurre de cacao (BC) | 26% | 29% |
| matière sèche végétale provenant de fèves de cacao | 16% | 5% |
| saccharose | 29% | 31% |
| matière grasse SFC =< 40% à 20°C : matière grasse laitière anhydre (MGLA) | 15% | 15% |
| matière sèche laitière : lait en poudre dégraissé | 8% | 19% |
| agent sucrant : sorbitol | 0% | 0% |
| épice : vanille en poudre | 1% | 0% |
| émulsifiant : lécithine de soja | 1% | 1% |
| rapport pondéral MGLA/BC | 0,58 | 0,52 |
| teneur en eau | 0,5% | 2,5% |
| **rapport pondéral MG totale/(matière sèche dégraissée totale)** | 0,71 | 0,80 |

| | DB7 Profil aromatique type "fruité" |
|---|---|
| beurre de cacao (BC) | 28% |
| matière sèche végétale : poudre de banane | 17% |
| saccharose | 28% |
| matière grasse SFC =< 40% à 20°C : matière grasse laitière anhydre (MGLA) | 16% |
| matière sèche laitière : lait en poudre dégraissé | 8% |
| agent sucrant : sorbitol | 2% |
| épice | 0% |
| émulsifiant : lécithine de soja | 1% |
| rapport pondéral MGLA/BC | 0,57 |
| teneur en eau | 1,0% |
| **rapport pondéral MG totale/(matière sèche dégraissée totale)** | 0,80 |

## Revendications

1. Produit alimentaire anhydre comprenant :
- entre 15% et 40% en masse de beurre de cacao ;
- entre 3% et 50% en masse de matière sèche végétale ;
- entre 10% et 38% en masse de mono-, di- et/ou polysaccharides ;
- entre 10% et 40% en masse de matière grasse ayant un SFC inférieur ou égal à 40% à 20°C ;
- optionnellement jusqu'à 30% en masse de matière sèche laitière ;
- optionnellement jusqu'à 20% en masse d'agent sucrant ;
- optionnellement jusqu'à 8% en masse d'épices ; et
- optionnellement jusqu'à 5% en masse d'émulsifiant ;
ce produit est tel que :
- le rapport pondéral entre la matière grasse ayant un SFC inférieur ou égal à 40% à 20°C et le beurre de cacao est supérieur à 0,25 ;
- sa teneur en eau est inférieure à 5% en poids ; et
- la matière sèche du produit a un D(90) inférieur ou égal à 50 microns dans le produit fini.

2. Produit alimentaire anhydre selon la revendication 1, **caractérisé en ce que** la matière sèche végétale est de la poudre de cacao sec dégraissé et représente entre 3% et 40% en masse, et **en ce que** les mono-, di- et/ou polysaccharides représentent entre 15% et 38% en masse.

3. Produit alimentaire anhydre selon la revendication 2, **caractérisé en ce que** :
- le beurre de cacao représente entre 20% et 40% en masse ;
- la poudre de cacao sec dégraissé représente entre 10% et 40% en masse ;
- les mono-, di- et/ou polysaccharides représentent entre 20% et 38% en masse ;
- la matière grasse ayant un SFC inférieur ou égal à 40% à 20°C représente entre 10% et 30% en masse ;
- la masse de matière sèche laitière, lorsqu'elle est présente, représente jusqu'à 20% en masse, et **en ce que**
- les épices, lorsqu'elles sont présentes, représentent jusqu'à 5% en masse.

4. Produit alimentaire anhydre selon la revendication 2, **caractérisé en ce que** :
- le beurre de cacao représente entre 15% et 30% en masse ;
- la poudre de cacao sec dégraissé représente entre 3% et 20% en masse ;
- les mono-, di- et/ou polysaccharides représentent entre 20% et 38% en masse ;
- la matière grasse ayant un SFC inférieur ou égal à 40% à 20°C représente entre 10% et 20% en masse ;
- la matière sèche laitière représente entre 10% et 30% en masse,
et **en ce que**
- les épices, lorsqu'elles sont présentes, représentent jusqu'à 5% en masse.

5. Produit alimentaire anhydre selon la revendication 1, **caractérisé en ce que** la matière sèche végétale est un fruit et/ou un légume déshydraté et les mono-, di- et/ou polysaccharides représentent entre 15% et 50% en masse.

6. Produit alimentaire anhydre selon l'une quelconque des revendications précédente, **caractérisé en ce que** le rapport pondéral entre la matière grasse totale et la matière sèche dégraissée totale est supérieur ou égal à 0,70.

7. Procédé de préparation du produit alimentaire anhydre selon l'une quelconque des revendications 1 à 6, ce procédé comprenant les étapes suivantes :
a) broyage et homogénéisation des différents ingrédients dudit produit jusqu'à obtenir une masse dont la granulométrie est **caractérisée par** un D(90) inférieur ou égal à 50 microns ; cette masse est ensuite homogénéisée par agitation en maintenant une température comprise entre 35 et 75°C ;
b) tempérage du produit, afin de contrôler la cristallisation du beurre de cacao et de la matière grasse ayant un SFC ≤ 40% à 20°C, pour une mise en œuvre optimale du produit ;
c moulage du produit obtenu à l'issue de l'étape b) de tempérage.

8. Utilisation du produit alimentaire anhydre selon l'une quelconque des revendications 1 à 6 pour la fabrication d'une préparation alimentaire élaborée.

9. Préparation alimentaire élaborée comprenant le produit alimentaire anhydre selon l'une quelconque des revendications 1 à 6 et un hydratant constitué d'au moins 80% en masse d'eau, **caractérisée en ce que** le ratio massique hydratant / produit alimentaire anhydre est compris entre 0, 1 et 4.

10. Préparation alimentaire élaborée selon la revendication 9, **caractérisée en ce que** l'hydratant est un liquide aqueux choisi parmi l'eau, les infusions, les soupes, les thés, le café, les jus de fruit, de légume, de plante, de poisson ou de viande et les laits animaux ou végétaux et leur mélange.

11. Préparation alimentaire élaborée selon la revendication 9 ou la revendication 10, **caractérisée en ce qu'**elle est une préparation alimentaire élaborée foisonnée et **en ce que** la quantité d'hydratant est comprise entre 20% et 50% en masse par rapport à la masse totale de ladite préparation.

12. Procédé de fabrication d'une préparation alimentaire élaborée et foisonnée selon la revendication 11, **caractérisé en ce qu'**il comprend les étapes de :
- mélange dudit hydratant et dudit produit alimentaire anhydre ; et
- foisonnement dudit mélange avec un système d'incorporation de gaz.

13. Préparation alimentaire élaborée selon la revendication 9 ou la revendication 10, **caractérisée en ce qu'**elle est une glace et **en ce que** la quantité d'hydratant est comprise entre 20% et 60% en masse par rapport à la masse totale de ladite préparation.

14. Procédé de fabrication d'une glace selon la revendication 13, **caractérisé en ce qu'**il comprend les étapes de :
- mélange dudit hydratant et dudit produit alimentaire anhydre ; et
- mixage et turbinage dudit mélange entre -6 et -10°C ; et
- stockage au congélateur.
